(19) Europäisches Patentamt
European Patent Office
Office européen des brevets

(11) Publication number: **0 090 506**
**B1**

# (12) EUROPEAN PATENT SPECIFICATION

(45) Date of publication of patent specification: **26.10.88**

(51) Int. Cl.[4]: **C 10 M 137/10,** C 07 F 9/165

(21) Application number: **83301130.7**

(22) Date of filing: **03.03.83**

## (54) Lubricant compositions containing a dithiophosphoric acid ester-aldehyde reaction product.

(30) Priority: **26.03.82 US 362359**

(43) Date of publication of application:
**05.10.83 Bulletin 83/40**

(45) Publication of the grant of the patent:
**26.10.88 Bulletin 88/43**

(84) Designated Contracting States:
**BE DE FR GB IT NL**

(56) References cited:
**US-A-2 736 737**
**US-A-3 071 548**
**US-A-3 644 206**
**US-A-3 745 148**

(73) Proprietor: **MOBIL OIL CORPORATION**
**150 East 42nd Street**
**New York New York 10017 (US)**

(72) Inventor: **Davis, Robert Hall**
**517 Yale Avenue**
**Pitman New Jersey 08071 (US)**
Inventor: **Okorodudu, Abraham**
**725 Carter Hill Drive**
**West Deptford New Jersey 08066 (US)**
Inventor: **Sedlak, Michael**
**deceased (US)**

(74) Representative: **Cooper, John Anthony et al**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 090 506 B1

**Description**

The invention relates to certain phosphorus acid-hindered phenol aldehyde reaction products and to lubricant compositions containing same. More particularly the reaction product is made by reacting a diorgano dithiophosphoric acid with a hindered phenol aldehyde under such stoichiometric reaction conditions that the product contains two moles of the former.

Many industrial organic media are used under circumstances which contribute to their breakdown during service. Such media include lubricants and greases, hydraulic fluids for brake and transmission systems, resins and plastics for coatings and structural articles. The severe operating conditions of modern engines, for example, including automotive and gas turbine engines, have often caused lubricating oils to deteriorate rapidly during use. This oxidation deterioration is accelerated by the use of higher engine operation temperatures than formerly used. Oxidative deterioration of the oil is usually accompanied by the formation of gummy deposits, sludge, acids, which may be strong enough to cause metal corrosion and other products of chemical breakdown. The products may seriously interfere with the lubrication operation. The increase in viscosity, for example, which results from the oxidation of lubricants, impairs the proper function of engine components and depreciates engine performance and useful life.

US—A—2,736,737 discloses that the then known sulfur- and phosphorus-containing esters were highly corrosive, and that by reaction with certain aldehydes they maintained their lube-oil-improving properties without undesirable side effects.

U.S. Patent No. 3,644,206 teaches a product useful as an antioxidant in an organic fluid. The product is made by reacting a diorgano dithiophosphoric acid ester with a cyclic hindered aldehyde. The acid ester and the aldehyde react together in a 1:1 ratio.

Although many of the older known antioxidants have been found to be adequate in stabilizing some modern mineral oil lubricants and synthetic lubricant blends, discovery of the new and more effective additives would be highly desirable for improved protection in current engines and extension of operating limits for future engines.

It is one object of this invention to provide novel organic compositions which have improved oxidation stability and antiwear activity. It is a further object of this invention to provide novel compositions which afford protection against oxidation deterioration for organic media to which they have been added. Another object is to provide improved lubricating oil compositions capable of withstanding the oxidizing conditions of modern engines.

In accordance with the invention there is provided a product of the formula

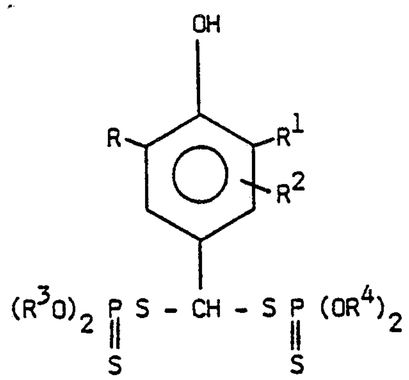

wherein R and $R^1$ are the same or different alkyl of 3 to 12 carbon atoms in any isomeric arrangement provided that the carbon atom attached to the ring is attached to at least two other carbon atoms, $R^2$ is hydrogen, alkyl, aryl, an aralkyl or alkaryl of 1 to 20 carbon atoms and $R^3$ and $R^4$ are the same or different alkyl of 1 to 20 carbon atoms, or aryl, aralkyl or alkaryl of 6 to 30 carbon atoms.

The invention further provides a lubricant composition comprising a major proportion of an oil of lubricating viscosity and an antioxidant or antiwear proportion of said product.

The product is readily prepared by a direct reaction of the formyl substituted hindered phenol with phosphorodithioic acid esters, as follows

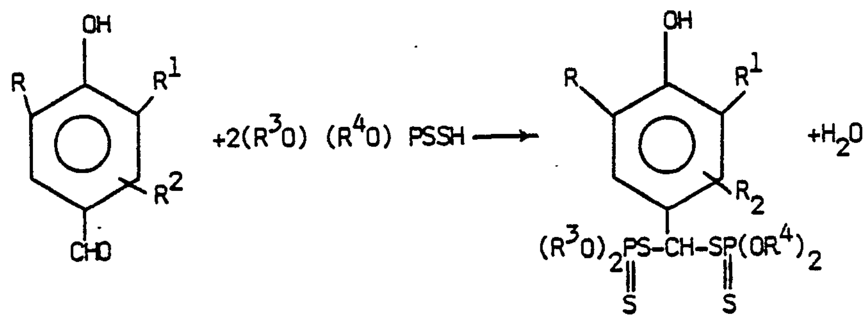

where $R^1$, $R^2$, $R^3$ and $R^4$ are as defined above. While the reaction of one mole of aldehyde with one mole of phosphorodithioic acid has been disclosed it is an essential part of this invention that two moles of phosphorodithioic acid be reacted with one mole of aldehyde. Also, while the nature of this reaction is not entirely known, it is believed that the first mole of phosphorodithioic acid reacts with the formyl group to produce the hydroxy addition product as previously disclosed, while the second mole of phosphorodithioic acid condenses with this product.

This reaction may be conducted in solvents such as benzene, toluene, xylenes, heptane and octane. Hexane is a preferred solvent. Reaction temperatures may range from 50°C to 200°C, preferably 70°C to 150°C. The reaction is preferably conducted at atmospheric pressure.

The hindered phenol aldehydes may be purchased or they can be prepared by the bromine oxidation, in t-butyl alcohol, of, for example, di-t-butyl-p-cresol or di-t-butyl-p-hydroxy benzyl alcohol, (G. M. Coppinger and T. W. Campbell, J. Am. Chem. Soc. 75, 734 (1953)). Included among the hindered phenol aldehydes falling within the scope of the above formula are 3,5-di-isopropyl-4-hydroxy-benzaldehyde and 3,5-di-t-octyl-4-hydroxy-benzaldehyde.

The phosphorodithioic acids can be made easily by the prior art method of reacting the appropriate alcohol with phosphorus pentasulfide. The alcohol, or phenol as the case may be, can be selected in accordance with the definitions of $R^3$ and $R^4$.

In general, the product is employed in an amount from 0.05% to 10% by weight, and preferably in an amount of from 0.25% to 2% by weight of the total weight of the composition.

Of particular significance, is the ability to counteract the accelerating effect of oxidation on metal and lubricant deterioration achieved by employing the aforementioned product. These products may be incorporated in lubricating media which may comprise liquid hydrocarbon oils in the form of either a mineral oil or a synthetic oil, or in the form of a grease, in which any of the aforementioned oils are employed as a vehicle. In general, mineral oils employed as the lubricant or grease vehicle may be of any suitable lubricating viscosity ranges as, for example, from 5.81 cs at 38°C to 1300 cs at 38°C (45 SSU at 100°F to 6,000 SSU at 100°F), and preferably from 7.3 cs at 99°C to 54 cs at 99°C (50 SSU at 210°F to 250 SSU at 210°F). These oils may have viscosity indexes varying from less than 0 to 100 or higher. Viscosity indexes from 70 to 95 are preferred. The average molecular weights of these oils may range from 250 to 800. Where the lubricant is to be employed in the form of a grease the lubricating oil is generally employed in an amount sufficient to balance the total grease composition, after accounting for the desired quantity of the thickening agent, and other additive components to be included in the grease formulation.

In instances where synthetic oils, or synthetic oils employed as the vehicle for the grease, are desired in preference to mineral oils, or in combination therewith, various compounds of this type may be successfully utilized. Typical synthetic vehicles include polyisobutylene, polybutenes, hydrogenated polydecenes, polypropylene glycol, polyethylene glycol, trimethylol propane esters, neopentyl and pentaerythritol esters, di(2-ethylhexyl) sebacate, di(2-ethylhexyl) adipate, di(butylphthalate) fluorocarbons, silicate esters, silanes, esters of phosphorous-containing acids, liquid ureas, ferrocene derivatives, hydrogenated mineral oils, chain-type polyphenols, siloxanes and silicones (polysiloxanes), alkyl-substituted diphenyl ethers typified by a butyl-substituted bis(p-phenoxy phenyl) ether, phenoxy phenylethers, etc.

The lubricating vehicles of the aforementioned greases of the present invention, containing the above-described products, are combined with a grease-forming quantity of a thickening agent. For this purpose, a wide variety of materials may be employed. These thickening or gelling agents may include any of the conventional metal salts or soaps, which are dispersed in the lubricating vehicle in grease-forming quantities, in such degree as to impart to the resulting grease composition the desired consistency. Other thickening agents that may be employed in the grease formation may comprise the non-soap thickeners, such as surface modified clays and silicas, aryl ureas, calcium complexes and similar materials. In general, grease thickeners may be employed which do not melt and dissolve when used at the required temperature within a particular environment; however, in all other respects, any materials which are normally employed for thickening or gelling hydrocarbon fluids for forming greases, can be used in preparing the aforementioned improved greases in accordance with the present invention.

Example 1

n-Hexane, 900 ml, and di(4-methy-2-pentyl) phosphorodithioic acid, 670 g (2.2 moles) were charged into a 5 liter reaction flask protected from moisture and equipped with a Dean-Stark water trap. To this solution at 65°C was added, in portions, a slurry of 235 g (1 mole) of 3,5-di-t-butyl-4-hydroxybenzaldehyde in 800 ml of n-hexane over a 2 hour period. After the addition, the mixture was refluxed for 24 hours, cooled and filtered. The filtrate was washed with 10% $Na_2CO_3$ until aqueous layer was basic. The organic portion was then dried over anhydrous $MgSO_4$ and stripped of solvent, to give a clear liquid product.

Example 2

Toluene, 500 ml and dioleyl phosphorodithioic acid 252 g (0.4 moles) were charged into a 3 liter reaction flash protected from moisture and equipped with Dean-Stark water trap. To the solution, at 60°C, was added a slurry of 47 g (0.2 moles) of 3,5-di-t-butyl-4-hydroxybenzaldehyde in 300 ml of toluene over a 1 hour period. The reaction mixture was then heated at reflux for 16 hours, cooled and filtered. The filtrate was stripped of solvent to give a clear, dark brown oil.

Example 3

Reaction was run as in Example 1, using 117 g (0.5 mole) of 3,5-di-t-butyl-hydroxybenzaldehyde, 354 g (1 mole) of di-2-ethylhexyl phosphorodithioic acid and 1000 ml of n-hexane. The product was a clear viscous oil.

Table 1 summarizes antioxidant and copper stabilizer test data. The compound of Example 1 was used throughout. The rotary bomb oxidation test (RBOT) represents a rapid means of estimating the oxidation stability of turbine oils. In this method, the test oil, water and copper catalyst coil contained in a glass receptacle were placed in a copper bomb equipped with a pressure gauge. The bomb, which was charged with oxygen to a pressure of 90 psi, was placed in a constant temperature oil batch set at 150°FC and rotated axially at 100 rpm at an angle of 30 degrees from the horizontal. The time for test oil to react with a given volume of oxygen was measured and reported in minutes. Low RBOT values (less than 100 minutes) are indicative of low or poor oxidation stability.

In the static stability test, copper naphthenate was placed in the turbine oil at a concentration of 30 ppm of copper, and the sample was allowed to stand for 14 days at 54.5°C (120°F). Tolutriazole and/or other metal deactivator were used with the compound of this invention. These are not a part of the invention, and, as shown by Table 1, regardless of the deactivator or antioxidant, separation is found when the compounds of this invention are not in the combination.

TABLE 1

| Additive, Wt % | Tolutriazole Wt % | Other Wt % | Anti-oxidant, Wt % | Stability | RBOT (min) |
|---|---|---|---|---|---|
| 0.1 | 0.5 | --- | 0.5 | No Separation | 550 |
| 0.6 | 0.03 | --- | --- | No Separation | 445 |
| 0.6 | 0.03 | --- | --- | No Separation | 425 |
| 0.6 | ---- | 0.3 | --- | No Separation | 375 |
| 0.1 | ---- | 0.05 | 0.5 | No Separation | --- |
| 0 | 0.3 | --- | 0.5 | Separation | |
| 0 | ---- | 0.3 | 0.5 | Separation | |
| 0 | ---- | 0.3 | --- | Separation | |

FZG (Forschungsstelle Fur Zahnrader and Getriebebau) Test was devised for use in the mechanical testing of gear oils. This involved splash lubricating specified gears that were running at constant speed in the gear oil under evaluation at a given initial temperature. The loading of the tooth flanks was increased in stages. After each load stage, the changes in weight of the test gears were measured by weighing and the change in appearance of the tooth flanks (flank damage) was visually recorded (photographs, contact transfer, description).

The FZG Test was continued up to and including Stage 12, provided failure (high wear rate) of the tooth flanks did not necessitate the premature conclusion of the test. Table 2 summarizes the results with Example 1.

TABLE 2

| Addition | Wt. % | Results |
|---|---|---|
| Example 1 | 0.09 | FZG 12 stages |
| Lubrizol commercial Zn dithio phosphate | 0.09 | FZG 8 stages |

*4-Ball Wear Test*

This test is the well known Shell 4-Ball Wear Test for determining resistance to searing of the metal. In this test 1.27 cm (½ inch) diameter 52100 steel balls were used at a load of 60 Kg for 30 minutes at the temperatures, additive concentrations and speeds shown in Table 3. The oil used was an 80/20 mixture of solvent refined Mid-Continent paraffinic 150/160 bright mineral oil and furfural refined Mid-Continent 200/210 neutral mineral oil.

TABLE 3

| Example | Additive | Additive Conc. Wt.% | Temp. °F | SPEED (RPM) 500 | 1,000 | 1,500 | 2,000 |
|---|---|---|---|---|---|---|---|
| Base Stock Only | | 0 | Room | -- | -- | -- | -- |
| | | | 200 | 0.05 | 1.40 | 2.10 | -- |
| | | | 390 | 0.70 | 1.60 | 2.40 | 2.0 |
| 1 | Ex. 1 | 1 | Room | 0.38 | 0.50 | 0.60 | 0.66 |
| | | | 200 | 0.50 | 0.61 | 0.65 | 0.70 |
| | | | 390 | 0.70 | 1.01 | 1.36 | 1.68 |
| 2 | Ex. 3 | 1 | Room | 0.30 | 0.40 | 0.50 | 0.53 |
| | | | 200 | 0.40 | 0.83 | 0.50 | 0.60 |
| | | | 390 | 0.60 | 0.62 | 0.68 | 0.70 |
| 3 | Ex. 2 | 1 | Room | 0.40 | 0.53 | 0.63 | 0.75 |
| | | | 200 | 0.46 | 0.58 | 0.68 | 0.75 |
| | | | 390 | 0.73 | 0.83 | 1.36 | 1.68 |

**Claims**

1. A product of the formula

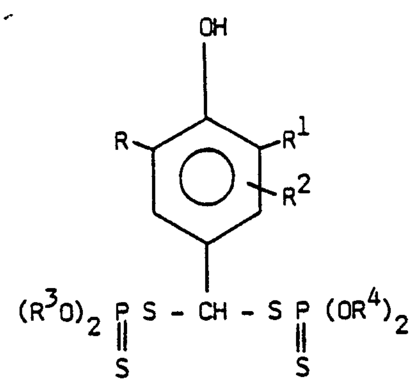

wherein R and $R^1$ are the same or different alkyl of 3 to 12 carbon atoms in any isomeric arrangement provided that the carbon atom attached to the ring is attached to at least two other carbon atoms, $R^2$ is hydrogen, alkyl, aryl, aralkyl or alkaryl of 1 to 20 carbon atoms and $R^3$ and $R^4$ are the same or different alkyl of 1 to 20 carbon atoms, or aryl, aralkyl or alkaryl of 6 to 30 carbon atoms.

2. The product of claim 1, wherein R and $R^1$ are 3,5-di-t-butyl groups, $R^2$ is hydrogen and $R^3$ and $R^4$ are 4-methyl-2-pentyl groups.

3. The product of claim 1, wherein R and $R^1$ are 3,5-di-t-butyl groups, $R^2$ is hydrogen and $R^3$ and $R^4$ are oleyl groups.

4. The product of claim 1, wherein R and $R^1$ are 3,5-di-t-butyl groups, $R^2$ is hydrogen and $R^3$ and $R^4$ are 2-ethylhexyl groups.

5. A lubricant composition comprising a major proportion of a lubricant and an antioxidant or antiwear amount of a product according to any preceding claim.

6. The lubricant composition of claim 5, wherein said lubricant is a mineral oil, a synthetic oil, mixtures thereof or a grease.

7. The lubricant composition of claim 5 or claim 6, wherein said amount is from 0.05 to 10% by weight of the total composition.

**Patentansprüche**

1. Produkt der Formel

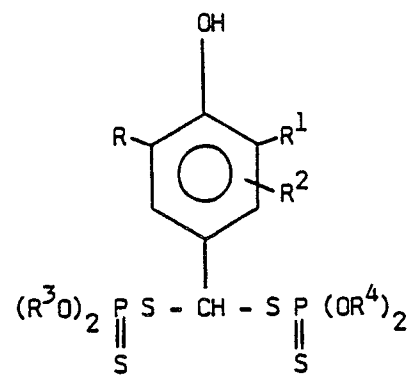

worin R und $R^1$ ein gleiches oder unterschiedliches Alkyl mit 3 bis 12 Kohlenstoffatomen in isomerer Anordnung ist, vorausgesetzt, daß das an den Ring gebundene Kohlenstoffatom an zumindest zwei andere Kohlenstoffatome gebunden ist, $R^2$ Wasserstoff, Alkyl, Aryl, Aralkyl oder Alkaryl mit 1 bis 20 Kohlenstoffatomen ist und $R^3$ und $R^4$ ein gleiches oder unterschiedliches Alkyl mit 1 bis 20 Kohlenstoffatomen oder Aryl, Aralkyl oder Alkaryl mit 6 bis 30 Kohlenstoffatomen ist.

2. Produkt nach Anspruch 1, worin R und $R^1$ 3,5-Di-t-butyl-Gruppen sind, $R^2$ Wasserstoff ist und $R^3$ und $R^4$ 4-Methyl-2-pentyl-Gruppen darstellen.

3. Produkt nach Anspruch 1, worin R und $R^1$ 3,5-Di-t-butyl-Gruppen sind, $R^2$ Wasserstoff und $R^3$ und $R^4$ Oleylgruppen darstellen.

4. Produkt nach Anspruch 1, worin R und $R^1$ 3,5-Di-t-butyl-Gruppen sind, $R^2$ Wasserstoff ist und $R^3$ und $R^4$ 2-Ethylhexyl-Gruppen darstellen.

5. Schmiermittelzusammensetzung, die einen Hauptanteil eines Schmiermittels und eine oxidationshemmende oder verschleißemmende Menge eines Produktes nach einem der vorstehenden Ansprüche umfaßt.

6. Schmiermittelzusammensetzung nach Anspruch 5, worin das Schmiermittel ein Mineralöl, ein synthetisches Öl, Mischungen davon oder ein Fett ist.

7. Schmiermittelzusammensetzung nach Anspruch 5 oder 6, worin diese Menge von 0,05 bis 10 Gew.-% der gesamten Zusammensetzung beträgt.

**Revendications**

1. Un produit de formule

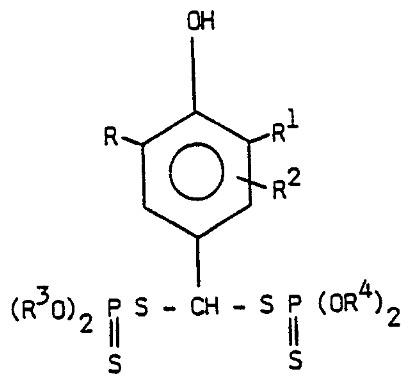

dans·laquelle R et $R^1$ sont des radicaux alkyles identiques ou différents en $C_3$—$C_{12}$ dans n-importe quelle disposition isomérique, pourvu que l'atome de carbone fixé au noyau soit fixé à au moins deux autres atomes de carbone, $R^2$ est un atome d'hydrogène ou un groupe alkyle, aryl, arylalkyl ou alkylaryle en $C_1$—$C_{20}$ et $R^3$ et $R^4$ sont des groupes identiques ou différents, alkyles en $C_1$—$C_{20}$ ou aryles, arylalkyles ou alkylaryles en $C_6$—$C_{30}$.

2. Le produit selon la revendication 1, dans lequel R et $R^1$ sont des groupes 3 et 5-t-butyles, $R^2$ est un atome d'hydrogène et $R^3$ et $R^4$ sont des groupes 4-méthyle et 2-pentyle.

3. Le produit selon la revendication 1, dans lequel R et $R^1$ sont des groupes 3 et 5-t-butyles, $R^2$ est un atome d'hydrogène et $R^3$ et $R^4$ sont des groupes oléyles.

4. Une production selon la revendication 1, dans laquelle R et $R^1$ sont des groupes 3 et 5-t-butyles, $R^2$ est un atome d'hydrogène et $R^3$ et $R^4$ sont des groupes 2-éthylhexyles.

5. Une composition lubrifiante comprenant une proportion principale d'un lubrifiant et une quantité d'un produit selon l'une quelconque des revendications précédentes comme antioxydant ou agent anti-usure.

6. La composition lubrifiante selon la revendication 5, dans laquelle ledit lubrifiant est une huile minérale, une huile synthétique ou leurs mélanges ou une graisse.

7. La composition lubrifiante selon la revendication 5 ou 6, dans laquelle ladite quantité est de 0,05 à 10% en poids par rapport à la composition totale.